# EUROPÄISCHE PATENTSCHRIFT

(11) **EP 0 655 608 B1**
(45) Veröffentlichungstag und Bekanntmachung des Hinweises auf die Patenterteilung: **09.06.1999**
(21) Anmeldenummer: 94250258.4
(22) Anmeldetag: 19.10.1994
(51) Int. Cl.: G01D 9/10, G01D 15/28

(54) **Antriebsanordnung für einen Prozessschreiber**
Drive arrangement for a chart-recorder
Système d'entraînement pour un enregistreur de diagramme

(30) Priorität: 18.11.1993 DE 4339783
(43) Veröffentlichungstag der Anmeldung: 31.05.1995
(73) Patentinhaber: Hartmann & Braun GmbH & Co. KG, 60487 Frankfurt (Main) (DE)
(72) Erfinder: Köhler, Eberhard, D-61381 Friedrichsdorf (DE); Thönebe, Werner, D-30890 Barsinghausen (DE)
(74) Vertreter: Meissner, Peter E., Dipl.-Ing.

(56) Entgegenhaltungen:
- GB-A- 2 140 355
- US-A- 4 939 541
- SIEMENS POWER ENGINEERING & AUTOMATION, BERLIN, GERMANY, Bd. 7, no.5, September 1985 Seiten 364-366, M. ZANABILI 'New Servo-Type Dotted-Line Recorders'

## Beschreibung

Die Erfindung betrifft eine Antriebsanordnung für einen Prozeßschreiber mit einem Gehäuse, in welchem die Schreiberkomponenten im wesentlichen bestehend aus einem oder mehreren Aufzeichnungssystemen, eine oder mehrere Leiterplatten zur Signalaufbereitung und eine Schreibtischanordnung mit Aufnahme- und Vorschubmitteln für einen Aufzeichnungsträger mit Hilfe von Fixierungsmitteln in Funktionslage zueinander gehalten werden.

Ein Prozeßschreiber der genannten Art ist beispielsweise als Linienschreiber aus dem Werbeprospekt der Hartmann & Braun AG (50/42-09/92 EN, aus 12.92) bekannt. Bei einem solchen bekannten Prozeßschreiber ist vorgesehen, daß Schreiberkomponenten wie die Aufzeichnungssysteme und die Leiterplatten fest auf einem Chassis montiert sind. Die Schreibtischanordnung und das Chassis sind mit Mitteln versehen, die zum Zwecke der Entnahme und Ergänzung des Aufzeichnungsträgers eine Entnahme der Schreibtischanordnung aus dem Chassis des in der Einbaulage befindlichen Schreibers gestatten.

Bei einem derartigen Prozeßschreiber ist zum Transport des Aufzeichnungsträgers in der Schreibtischanordnung ein Elektromotor vorgesehen, der fest mit dem Chassis verbunden ist. Die Kraftübertragung von dem Elektromotor zu den Vorschubmitteln der Schreibtischanordnung erfolgt über ein in der Schreibtischanordnung integriertes Rädergetriebe, das bei jeder Entnahme der Schreibtischanordnung aus dem Chassis getrennt wird und anschließend wieder in Wirkposition zu bringen ist. Dieses Rädergetriebe ist mit Stirnzahnrädern ausgeführt, so daß bei jeder Herstellung der Wirkposition die Gefahr der Überbeanspruchung der Zähne infolge direkten Aufeinandertreffens derselben besteht und darüber hinaus infolge unvermeidbarer Toleranzen entweder kein Eingriff korrespondierender Stirnzahnräder zustande kommt oder der zulässige Achsabstand der in Eingriff zu bringenden Zahnräder unterschritten wird mit der Gefahr erhöhten Verschleißes bis hin zur Beschädigung derselben. Zur Sicherstellung des Betriebes unter diesen Bedingungen ist der Elektromotor in der Regel überdimensioniert, beansprucht erhöhten Raumbedarf und Speiseleistung. Häufig ist der Elektromotor netzgespeist und zumindest anschlußseitig zur Gewährleistung des Berührungsschutzes bei entnommener Schreibtischanordnung isolierend gekapselt.

Weiterhin ist aus der DE 26 18 309 eine Transportvorrichtung für den Registrierstreifen eines schreibenden Meßgerätes bekannt, bei dem der für den Registrierstreifenvorschub benötigte Antriebsmotor mit zugehörigem Getriebe innerhalb des hohlzylindrisch ausgeführten Walzenkörpers der Stiftwalze koaxial angeordnet ist, wobei der Antriebsmotor elektrisch über eine Leiterplatte und als Stiftleiste ausgeführte Kontakte, die beim Einschwenken des Chassis in das Gerätegehäuse die Stromkreise zum Antriebsmotor schließen, mit der Stromversorgung verbindbar ist.

Nachteiligerweise ist bei einer derartigen Vorrichtung die Zugänglichkeit des Antriebsmotors und des zugehörigen Getriebes in der Stiftenwalze zumindest erschwert, so daß zu Servicezwecken stets fein justierte Bauteile aus dem Chassis entnommen und darüber hinaus zerlegt werden müssen. Überdies ist die Stromzufuhr von dem statischen Chassis in das Innere der rotierenden Stiftenwalze hinsichtlich der Konstanz des Übergangswiderstandes und der elektromagnetischen Verträglichkeit problematisch. Darüber hinaus steht eine derartige Antriebsanordnung der Miniaturisierung der Stiftenwalze entgegen.

Weiterhin sind Stiftleisten zur Kontaktierung in von der Axialen abweichenden Bewegungsrichtung ungeeignet, da während der Kontaktierung durch Überschreitung zulässiger radialer Auslenkung mechanische Verspannungen in der Kontaktanordnung auftreten, die die Gefahr der Beschädigung in sich bergen.

Der Erfindung liegt daher die Aufgabe zugrunde, eine Antriebsanordnung für einen Prozeßschreiber der gattungsgemäßen Art anzugeben, bei der Überschreitungen von Toleranzgrenzen sicher vermieden werden, deren Komponenten einzeln zugänglich sind und deren elektrische Ankopplung möglichst einfach ist.

Erfindungsgemäß wird diese Aufgabe mit den Mitteln des Patentanspruches 1 gelöst. Vorteilhafte Ausgestaltungen der Erfindung sind in den Ansprüchen 2 und 3 genannt.

Im einzelnen ist der Elektromotor im Schreibtischrahmen der verschwenkbaren und entnehmbaren Schreibtischanordnung angeordnet und steht unabhängig von der Lage der Schreibtischanordnung mit dem Rädergetriebe ständig in vorgegebener definierter Wirkverbindung.

Für die Energieversorgung des Elektromotors sind am Schreibtischrahmen voneinander isolierte Schleifkontakte vorgesehen, die korrespondierenden voneinander isolierten parallelen oder Konzentrischen Schleifbahnen an einer Wandung innerhalb des Prozeßschreibers zugeordnet sind.

Vorteilhafterweise werden dadurch Überbeanspruchungen und Beschägigungen des Rädergetriebes durch Trennen und Fügen von Getriebeteilen bei bestimmungsgemäßem Gebrauch des Prozeßschreibers vermieden. Darüber hinaus stellt die Schreibtischanordnung mit Elektromotor eine in sich abgeschlossene funktionsfähige und als solche prüfbare Einheit dar.

In weiterer Ausgestaltung der Erfindung ist der Elektromotor als Kleinspannungsgleichstrommotor ausgeführt.

Vorteilhafterweise erfolgt die elektrische kontaktierung der Energieversorgung des Elektromotors selbsttätig beim Einschwenken der Schreibtischanordnung in die Funktionslage. Darüber hinaus kann bei Beaufschlagung von freiliegenden spannungsführenden Gerateteilen mit Kleinspannung gemäß einschlägigen Vorschriften auf einen separaten Berührungsschutz dieser Geräteteile verzichtet werden.

In besonderer Ausgestaltung der Erfindung ist darüber hinaus im Gehäuse des Prozeßschreibers ein Sensor vorgesehen, mit dem die Abweichung der Schreibtischanordnung von der Funktionslage überwacht wird. Dieser Sensor steht in Wirkverbindung mit einer Schaltstufe, deren Ausgänge mit den Schleifbahnen an einer Wandung innerhalb des Prozeßschreibers verbunden sind.

Wird die Schreibtischanordnung aus der Funktionslage verschwenkt, werden die Schleifbahnen spannungsfrei geschaltet.

Diese Maßnahme sichert einen über die einschlägigen Vorschriften hinausgehenden Berührungsschutz insbesondere beim Einlegen, Wechseln und Entfernen des Aufzeichnungsträgers.

Die Erfindung wird nachstehend anhand eines Ausführungsbeispiels näher erläutert. Die dazu erforderlichen Figuren zeigen:
- Figur 1: eine Seitenansicht der in Funktionslage Dargestellten Komponenten eines Prozeßschreibers.
- Figur 2: eine Seitenansicht der Schreibtischanordnung.

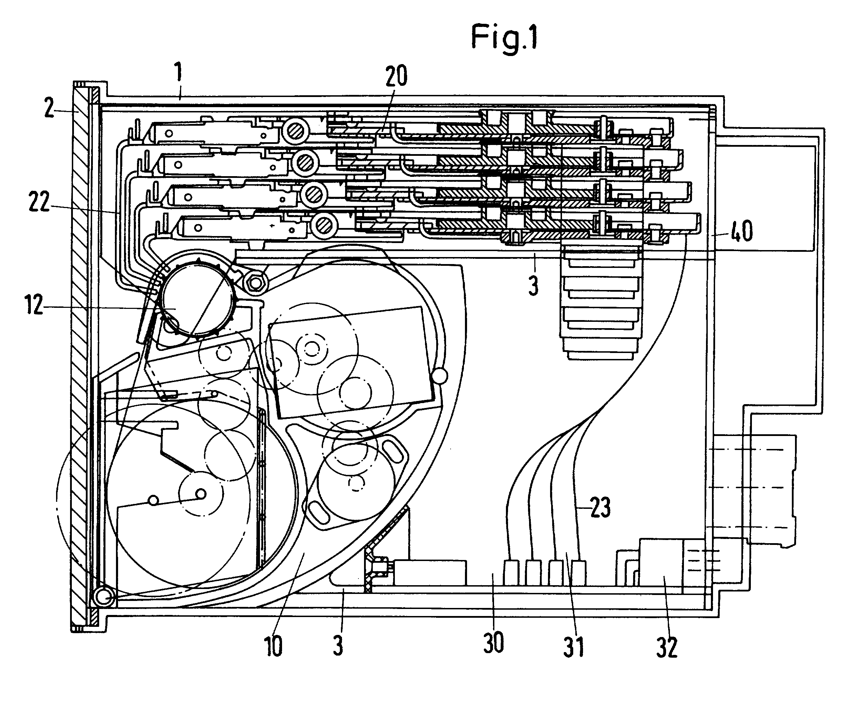

Figur 1 zeigt einen in einem Gehäuse 1 angeordneten, mit einer Fronttür 2 ausgestatteten Prozeßschreiber in Seitenansicht mit der Darstellung aller Schreiberkomponenten, welche in Funktionslage zueinander montiert sind. In Funktionslage zueinander angeordnet heißt hierbei, daß das Aufzeichnungssystem mit den entsprechend darauf angeordneten Stiften in schreibendem Eingriff auf dem Aufzeichnungsträger der Schreibtischanordnung stehen. Die einzelnen Schreiberkomponenten sind in entsprechende Fixierungsmittel bzw. Führungsschienen 3 eingeschoben und werden somit in Funktionslage zueinander gehalten. Mit Figur 1 ist ein Aufzeichnungssystem mit Schreibfedern 22 dargestellt, die in dieser Funktionslage federnd an der über einen Traktor 12 abgewickelten Oberfläche eines Aufzeichnungsträgers 11 anliegen. Der Prozeßschreiber weist eine Schreibtischanordnung 10 auf, die an der in das Gehäuse 1 hineinweisenden Außenseite einen Viertelkreis beschreibt, wodurch sich ergibt, daß die Schreibtischanordnung 10 durch eine Schwenkbewegung aus dem Gehäuse 1 herausgenommen werden kann, ohne daß die Schreibfedern 22 hinderlich sind oder das Aufzeichnungssystem 20 zuvor demontiert bzw. herausgezogen werden müßte. Weiterhin ist eine Leiterplatte 30 dargestellt, die am Boden des Gehäuses 1 ebenfalls in einer Führungsschiene 3 angeordnet und hier liegend positioniert ist. Die elektrischen Anschlüsse 23 des Aufzeichnungssystems 20 sind von oben auf die Steckanschlüsse 31 der Leiterplatte aufgesteckt. Dagegen sind die Anschlüsse 32 der Leiterplatte, welche mit dem Steckanschluß X2 der Netzteilplatte 40 in Eingriff stehen so positioniert, daß die Anschlußelemente parallel zum Boden der Platte stehen. Dies ermöglicht, daß nach Herausnahme der Schreibtischanordnung 10 aus dem Gehäuse 1 die Leiterplatte 30, nachdem die Steckverbindungen 23 und 31 gelöst sind, einfach nach vorn herausgezogen werden kann, was eine einfache Montage und Demontage ermöglicht, ohne daß einzelne Leiterplatten zuvor gelöst werden müssen.

Darüber hinaus ist eine Netzteilplatte 40 vorgesehen, die an der Geräterückwand aufrecht fixiert ist.

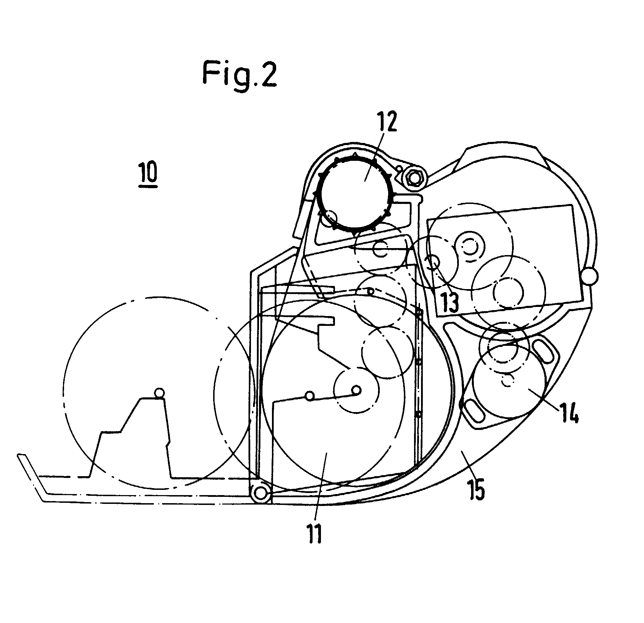

In Figur 2 ist die Schreibtischanordnung 10 separat dargestellt. An einem Schreibtischrahmen 15 sind ein Elektromotor 14 und ein Traktor 12 vorgesehen, die über ein Getriebe 13 in Wirkverbindung stehen. Darüber hinaus sind Mittel zur Bevorratung und Aufnahme eines Aufzeichnungsträgers 11 dargestellt. Der Elektromotor 14 ist mit dem Schreibtischrahmen 15 verbunden. Unabhängig von der Lage der Schreibtischanordnung 10 innerhalb oder außerhalb des Gehäuses 1 des Prozeßschreibers bleiben die Wirkverhältnisse zwischen dem Elektromotor 14 und dem Getriebe 13 unverändert erhalten.

### Bezugszeichenliste:

- 1: Gehäuse
- 2: Fronttür
- 3: Fixierungsmittelt/Führungsschienen
- 10: Schreibtischanordnung
- 11: Aufzeichnungsträger
- 12: Traktor
- 13: Getriebe
- 14: Elektromotor
- 15: Schreibtischrahmen
- 20: Aufzeichnungssystem
- 22: Schreibfedern
- 23: Steckverbindungen
- 30: Leiterplatte
- 31: Anschlüsse
- 32: Steckverbinder
- 40: Netzteilleiterplatte

## Patentansprüche

1. Antriebsanordnung für einen Prozeßschreiber mit mindestens einem Elektromotor zum Transport eines Aufzeichnungsträgers und mit einer modulartigen Schreibtischanordnung, die Mittel zur Bevorratung und Kraftübertragungsmittel zum Transport des Aufzeichnungsträgers aufweist und
der Elektromotor (14) zum Transport des Aufzeichnungsträgers (11) Bestandteil der modulartigen Schreibtischanordnung (10) ist, dadurch gekennzeichnet, daß die Schreibtischanordnung (10) zur Energieversorgung des Elektromotors (14) voneinander isolierte Schleifkontakte aufweist, die korrespondierenden voneinander isolierten Schleifbahnen an einer Wandung innerhalb des Prozeßschreibers zugeordnet sind.

2. Antriebsanordnung nach Anspruch 1,
dadurch gekennzeichnet,
daß der Elektromotor (14) als Kleinspannungsgleichstrommotor ausgeführt ist.

3. Antriebsanordnung nach Anspruch 1,
dadurch gekennzeichnet,
daß im Gehäuse (1) des Pruzeßschreibers ein Sensor zur Überwachung der Abweichung der Schreibtischanordnung (10) von der Funktionslage vorgesehen ist, der mit einer Schaltstufe verbunden ist, deren Ausgänge mit den Schleifbahnen an einer Wandung innerhalb des Prozeßschreibers verbunden sind.

## Claims

1. Drive arrangement for a plotter including at least one electric motor for transporting a recording medium and also including a modular support arrangement comprising storage means and power transmission means for transporting the recording medium, wherein the electric motor (14) for transporting the recording medium (11) is a component of the modular support arrangement (10), characterised in that the support arrangement (10) comprises mutually insulated sliding contacts for supplying energy to the electric motor (14), said contacts being associated with corresponding mutually insulated slideways on a wall within the plotter.

2. Drive arrangement in accordance with Claim 1, characterised in that the electric motor (14) is in the form of a low voltage dc motor.

3. Drive arrangement in accordance with Claim 1, characterised in that a sensor for monitoring any departure of the support arrangement (10) from its operational position is provided in the housing (1) of the plotter, said sensor being connected to a switching stage whose outputs are connected to the slideways on a wall within the plotter.

## Revendications

1. Dispositif d'entraînement pour un enregistreur de processus, comportant au moins un moteur électrique pour le transport d'un support d'enregistrement et un dispositif à table d'écriture du type modulaire, qui comporte des moyens pour emmagasiner et des moyens de transmission de force pour le transport du support d'enregistrement, le moteur électrique (14) pour le transport du support d'impression (10) faisant partie du dispositif à table d'écriture (10) de type modulaire,
caractérisé en ce que le dispositif à table d'écriture (10) comporte des contacts à frottement, isolés les uns par rapport aux autres, pour l'alimentation en énergie du moteur électrique (14), qui sont associés à des voies de frottement correspondantes et isolées les unes par rapport aux autres sur une paroi à l'intérieur de l'enregistreur de processus.

2. Dispositif d'entraînement selon la revendication 1,
caractérisé en ce que le moteur électrique (14) est réalisé sous forme d'un moteur à courant continu à tension réduite.

3. Dispositif d'entraînement selon la revendication 1,
caractérisé en ce que l'on prévoit dans le boîtier (1) de l'enregistreur de processus, un capteur pour surveiller l'écartement du dispositif à table d'écriture (10) de la position de fonctionnement, capteur qui est relié à un plot de commutation, dont les sorties sont reliées aux voies de frottement sur une paroi, à l'intérieur de l'enregistreur de processus.
